# EUROPÄISCHE PATENTSCHRIFT

(11) **EP 1 416 110 B1**
(45) Veröffentlichungstag und Bekanntmachung des Hinweises auf die Patenterteilung: **28.05.2008**
(21) Anmeldenummer: 03024210.1
(22) Anmeldetag: 21.10.2003
(51) Int. Cl.: E05B 71/00, B62H 5/14, E05B 67/28

(54) **Rahmenschloss für ein Zweirad**
Lock for the frame of two wheel vehicles
Serrure d'encerclement pour deux roues

(30) Priorität: 01.11.2002 DE 10250961
(43) Veröffentlichungstag der Anmeldung: 06.05.2004
(73) Patentinhaber: ABUS August Bremicker Söhne KG, 58292 Wetter (DE)
(72) Erfinder:
(74) Vertreter: Manitz, Finsterwald & Partner GbR

(56) Entgegenhaltungen:
- EP-A1- 0 415 499
- EP-A1- 0 550 795
- WO-A-90/02074
- DK-A- 27 191
- JP-A- 2001 001 967
- US-A- 4 033 160

## Beschreibung

Die Erfindung betrifft ein Sicherungssystem mit einem Rahmenschloss für ein Zweirad und mit einem Sicherungsseil. Ein derartiges Rahmenschloss besitzt üblicherweise ein Gehäuse mit einem Lagerschenkel und einem Aufnahmeschenkel, die einen Schließbereich begrenzen. Im montierten Zustand des Rahmenschlosses durchquert ein Speichenrad des Zweirads den Schließbereich. Das Speichenrad kann mittels des Rahmenschlosses wahlweise blockiert werden, um das Zweirad gegen eine unbefugte Benutzung zu sichern.

Zu diesem Zweck besitzt das Rahmenschloss einen Rundbügel, der in dem Lagerschenkel des Gehäuses gelagert ist und zwischen einer Freigabestellung und einer Schließstellung bewegt werden kann. In der Freigabestellung ist der Schließbereich des Rahmenschlosses bzw. das darin befindliche Speichenrad freigegeben, um das Zweirad bestimmungsgemäß benutzen zu können. In der Schließstellung jedoch erstreckt sich der Rundbügel quer durch den Schließbereich und greift in den gegenüberliegenden Aufnahmeschenkel des Gehäuses ein, so dass das Speichenrad gegen eine Drehbewegung blockiert ist.

Das Gehäuse eines derartigen Rahmenschlosses beherbergt üblicherweise eine Verriegelungseinrichtung, beispielsweise einen Schließzylinder, zum Verriegeln des Rundbügels in der Schließstellung. Ferner kann eine Handhabe zur Betätigung des Rundbügels vorgesehen sein, beispielsweise um den Rundbügel aus der Freigabestellung in die Schließstellung zu bewegen.

Es sind Rahmenschlösser der genannten Art bekannt, die zusätzlich ein Sicherungselement aufweisen, das das Sichern oder Fixieren eines Endstücks eines Sicherungsseils an dem Rahmenschloss ermöglicht. Ein derartiges Sicherungsseil gestattet ein zusätzliches Sichern des Zweirads an einem Befestigungsobjekt, beispielsweise an einem Laternenpfosten. Dadurch ist das Zweirad nicht nur aufgrund des Eingriffs des Rundbügels in den Schließbereich bzw. in das Speichenrad gegen ein unbefugtes Wegfahren gesichert. Sondern das Zweirad kann auch nicht von dem Befestigungsobjekt entfernt, beispielsweise weggetragen werden.

Bei bekannten Rahmenschlössern ist das genannte Sicherungselement beispielsweise durch ein Verriegelungselement gebildet, das von der Verriegelungseinrichtung des Rahmenschlosses gemeinsam mit einem weiteren Verriegelungselement zum Verriegeln des Rundbügels betätigt wird. Allerdings ist hierfür eine aufwändige Verriegelungseinrichtung mit mehreren Verriegelungselementen erforderlich. Außerdem kann sich die Handhabung eines derartigen Rahmenschlosses in manchen Fällen als umständlich erweisen, da zum Einen die Handhabe des Rundbügels, zum Anderen das Endstück des Sicherungsseils, und schließlich auch noch die eigentliche Verriegelungseinrichtung betätigt werden müssen.

Aus der WO 90/02074 A1 ist ein Sicherungssystem mit einem Rahmenschloss und einem Sicherungsseil bekannt, wobei das Rahmenschloss ein Gehäuse, einen Rundbügel, eine Handhabe, eine Verriegelungseinrichtung und ein Sicherungselement umfasst. Der Rundbügel ist mittels der Handhabe in zwei Lagerschenkeln des Gehäuses zwischen einer Freigabestellung und einer Schließstellung bewegbar. Die Verriegelungseinrichtung umfasst einen Zahlenschließmechanismus zum Verriegeln des Rundbügels in der Schließstellung. Das Sicherungselement wirkt mit diesem Zahlenschließmechanismus zusammen, um in der Schließstellung des Rundbügels ein Endstück des Sicherungsseils an dem Rahmenschloss zu sichern. Das Sicherungselement greift hier in Form einer Kralle an dem Endstück des Sicherungsseils an.

Es ist daher eine Aufgabe der Erfindung, ein Rahmenschloss mit einem einfachen Aufbau zu schaffen, an dem bei einfacher Handhabung ein Endstück eines Sicherungsseils gesichert werden kann.

Diese Aufgabe wird durch ein Sicherungssystem mit den Merkmalen des Anspruchs 1 gelöst.

Bei dem Rahmenschloss des erfindungsgemäßen sicherungssystems ist die Sicherungseinrichtung zum Sichern oder Fixieren des Sicherungsseils also zumindest teilweise an einer Handhabe ausgebildet oder durch eine Handhabe selbst gebildet. Diese Handhabe ist mit dem Rundbügel unmittelbar oder indirekt verbunden, so dass eine Bewegung der Handhabe und eine Bewegung des Rundbügels starr gekoppelt sind. Somit folgt auch das Sicherungselement stets zwangsläufig einer Bewegung des Rundbügels in die Schließstellung. Dadurch ist es möglich, dass das Endstück des Sicherungsseils nicht unmittelbar durch die zum Verriegeln des Rundbügels vorgesehene Verriegelungseinrichtung gesichert wird, sondern dass das Endstück indirekt durch eine Bewegung der Handhabe bzw. des Rundbügels fixiert wird.

Dies hat den Vorteil, dass durch eine Betätigung der Handhabe gleichzeitig ein Schließen des Rundbügels und eine Verriegelung des Sicherungsseils bewirkt werden können, so dass die Handhabung des Endstücks des Sicherungsseils einerseits und der Handhabe andererseits gemeinsam erfolgen können. Die Verriegelung des Rundbügels und des Endstücks ist dadurch vereinfacht. Außerdem kann die für die Verriegelung des Rundbügels vorgesehene Verriegelungseinrichtung einen einfachen, an sich bekannten Aufbau besitzen, da diese Verriegelungseinrichtung nicht zusätzliche eine direkte Verriegelung des Sicherungsseils übernehmen muss.

Bei dem Sicherungsseil kann es sich beispielsweise um ein Stahlseil, ein Seil mit gehärteten Hülsen, ein Spiralkabel, eine Kette oder einen Gelenkstabbügel handeln. Das dem genannten Endstück gegenüberliegende Ende des Sicherungsseils kann als Schlaufe ausgebildet sein, die die Ausbildung einer Schlinge zum Umgreifen des Befestigungsobjekts, beispielsweise eines Laternenpfostens, ermöglicht. Es ist auch möglich, dass das dem Endstück gegenüberliegende Ende des Sicherungsseils an dem Rahmenschloss oder am Rahmen des Zweirads dauerhaft befestigt ist, so dass im erstgenannten Fall das Rahmenschloss und das Sicherungsseil eine einzige Einheit bilden. Das Endstück des Sicherungsseils kann beispielsweise als Kloben, als Schlaufe oder als Öse ausgebildet sein. Eine Schlaufe kann an dem Sicherungsseil zum Beispiel durch einen Klemmkörper mit einschraubbarer Klemmschraube gebildet sein.

Als Handhabe ist im Zusammenhang mit der Erfindung generell ein Element zu verstehen, das mit dem Rundbügel fest verbunden ist, so dass eine Bewegung der Handhabe auf den Rundbügel übertragen wird, und umgekehrt. Für die erfindungsgemäße Sicherungsfunktion ist es dabei unerheblich, ob die Bewegung des Rundbügels mittels der Handhabe ausgelöst wird, oder ob stattdessen der Rundbügel ursächlich beispielsweise durch eine Betätigung eines Schließzylinders bewegt wird und die Handhabe dabei - in der Funktion eines Mitnehmerelements - mit dem Rundbügel lediglich mitbewegt wird.

Generell kann vorgesehen sein, dass in der Schließstellung des Rundbügels das Endstück des Sicherungsseils an dem Sicherungselement gefangen ist. Es ist jedoch auch möglich, dass an dem Lagerschenkel des Gehäuses ein Gegenelement ausgebildet ist, das mit dem genannten Sicherungselement zusammenwirkt und an dem in der Schließstellung des Rundbügels das Endstück des Sicherungsseils gefangen ist.

Gemäß einer vorteilhaften ersten Ausführungsform ist als Sicherungselement eine Aufnahmehülse vorgesehen, in die das Endstück des Sicherungsseils eingeführt werden kann. Diese Aufnahmehülse ist über einen Verbindungshals mit dem Rundbügel fest verbunden, so dass die Aufnahmehülse und der Rundbügel sich stets gemeinsam bewegen. Der Lagerschenkel des Gehäuses ist mit einer Schlitzaufnahme versehen. In diese Schlitzaufnahme kann das in die Aufnahmehülse eingesetzte Endstück unter gleichzeitiger Bewegung des Rundbügels dergestalt seitlich eingeführt werden, dass in der Schließstellung des Rundbügels das Endstück gegen eine Entnahme aus der Aufnahmehülse gesichert ist. Die Schließbetätigung des Rundbügels kann dabei in vorteilhafter Weise mittels des in die Aufnahmehülse eingesetzten Endstücks des Sicherungsseils veranlasst werden, so dass kein mehrmaliges Umgreifen zwischen verschiedenen Handhaben erforderlich ist.

Gemäß einer Variante der erläuterten ersten Ausführungsform ist ein Aufsetzdorn vorgesehen, der sowohl als Handhabe und als Sicherungselement dienen kann, und auf den das Endstück des Sicherungsseils aufgesetzt werden kann. Der Lagerschenkel des Gehäuses ist dabei mit einer Schlitzaufnahme versehen, in die der Aufsetzdorn durch eine Schließbewegung des Rundbügels eingeführt werden kann. Das auf den Aufsetzdorn aufgesetzte Endstück des Sicherungsseils ist gegen eine Entnahme von dem Aufsetzdom gesichert, sobald der Rundbügel sich in der Schließstellung befindet.

Gemäß einer zweiten Ausführungsform weist das Sicherungselement an der Handhabe lediglich einen Blockierabschnitt auf, und der Lagerschenkel des Gehäuses ist mit einer Halterung zum Aufnehmen des Endstücks des Sicherungsseils versehen. Dabei wirken der Blockierabschnitt und die Halterung dergestalt zusammen, dass das innerhalb der Halterung gehaltene Endstück des Sicherungsseils durch den Blockierabschnitt gegen eine Entnahme blockiert ist, sobald der Rundbügel in die Schließstellung gebracht und somit die Handhabe mit dem Blockierabschnitt an die genannte Halterung herangeführt worden ist.

Gemäß einer dritten Ausführungsform ist das Sicherungselement an der Handhabe als ein Sicherungsbügel ausgebildet, der das Endstück des Sicherungsseils aufzunehmen vermag. Der Lagerschenkel des Gehäuses besitzt dabei eine Bügelaufnahme, um in der Schließstellung des Rundbügels das freie Ende des Sicherungsbügels aufzunehmen und dadurch das an dem Sicherungsbügel angebrachte Sicherungsseil gegen eine Entnahme zu sichern.

Weitere Ausführungsformen der Erfindung sind in den Unteransprüchen genannt.

Die Erfindung wird nachfolgend beispielhaft unter Bezugnahme auf die Zeichnungen erläutert; in diesen zeigen:
- Fig. 1 und 2: eine Perspektivansicht eines Rahmenschlosses gemäß einer ersten Ausführungsform, wobei der Rundbügel sich in der Freigabestellung bzw. in der Schließstellung befindet,
- Fig. 3a und 3b: eine Draufsicht bzw. eine Seitenquerschnittsansicht eines Teils dieser ersten Ausführungsform eines Rahmenschlosses,
- Fig. 4 und 5: eine Perspektivansicht eines Rahmenschlosses gemäß einer Variante der ersten Ausführungsform, wobei der Rundbügel sich in der Freigabestellung bzw. in der Schließstellung befindet,
- Fig. 6a und 6b: eine Draufsicht bzw. eine Seitenquerschnittsansicht eines Teils dieser Variante der ersten Ausführungsform eines Rahmenschlosses,
- Fig. 7a und 7b: eine Draufsicht bzw. eine Seitenquerschnittsansicht eines Teils einer zweiten Ausführungsform eines Rahmenschlosses,
- Fig. 8a und 8b: eine Draufsicht bzw. eine Seitenquerschnittsansicht eines Teils einer Variante der zweiten Ausführungsform eines Rahmenschlosses, und
- Fig. 9a und 9b: eine Draufsicht bzw. eine Seitenquerschnittsansicht eines Teils einer dritten Ausführungsform eines Rahmenschlosses.

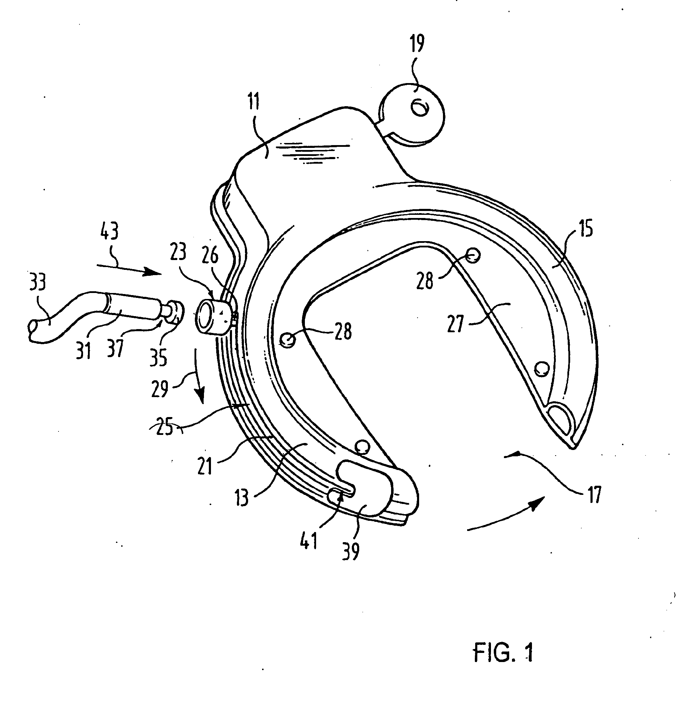

Fig. 1 zeigt ein Rahmenschloss, das beispielsweise an die Hintergabel eines Fahrrads montiert wird und auf an sich bekannte Weise ein Blockieren des hinteren Speichenrads dieses Fahrrads ermöglicht, um eine unbefugte Fahrt mit dem Fahrrad zu verhindern.

Dieses Rahmenschloss besitzt ein Gehäuse mit einem Basisabschnitt 11, an den sich ein gebogener Lagerschenkel 13 und ein gebogener Aufnahmeschenkel 15 des Gehäuses anschließen. Der Lagerschenkel 13 und der Aufnahmeschenkel 15 bilden gemeinsam eine Hufeisenform, und sie umschließen einen Schließbereich 17 des Rahmenschlosses. In diesen ragt ein Teil des Hinterrads hinein, falls das Rahmenschloss - wie erläutert - an der Hintergabel eines Fahrrads montiert ist.

Innerhalb des Basisabschnitts 11 befindet sich eine Verriegelungseinrichtung, beispielsweise ein Schließzylinder (in den Figuren nicht gezeigt). Diese Verriegelungseinrichtung kann auf an sich bekannte Weise mittels eines Schlüssels 19 betätigt werden.

Der Lagerschenkel 13 ist fast über seine gesamte Länge mit einem Führungsschlitz 21 versehen, aus dem eine Handhabe 23 herausragt. Die Handhabe 23 besitzt die Form eines an beiden Stirnseiten geöffneten Hohlzylinders.

Ein Rundbügel 25 befindet sich innerhalb des Lagerschenkels 13 und erstreckt sich in der in Fig. 1 gezeigten Freigabestellung auch entlang eines Teils des Basisabschnitts 11 und eines Teils des Aufnahmeschenkels 15. In dieser Stellung gemäß Fig. 1 ist der Rundbügel 25 nur innerhalb des Führungsschlitzes 21 zu erkennen. Die Handhabe 23 ist mit dem Rundbügel 25 über einen Verbindungshals 26 fest verbunden.

Das gezeigte Rahmenschloss ist ferner mit Versteifungsflächen 27 versehen, die innerhalb und außerhalb der Hufeisenform verlaufen. Außerdem sind Verbindungsnieten 28 gezeigt, die einen oberen und einen unteren Gehäuseteil miteinander verbinden (in den Figuren nicht detailliert gezeigt) .

Das in Fig. 1 gezeigte Rahmenschloss dient generell dazu, das in dem Schließbereich 17 befindliche Speichenrad wahlweise blockieren zu können, nämlich indem der Rundbügel 25 durch den Schließbereich 17 hindurch teilweise in den Aufnahmeschenkel 15 eingeführt wird. Somit verläuft der Rundbügel 25 zwischen zwei benachbarten Speichen des Speichenrads, und das Speichenrad ist dadurch gegen eine weitere Drehung blockiert.

Zu diesem Zweck wird der Rundbügel 25, ausgehend von der Freigabestellung gemäß Fig. 1, mittels der hiermit verbundenen Handhabe 23 entlang einer Schließrichtung 29 bewegt. Der Rundbügel 25 wird dadurch in eine Schließstellung überführt.

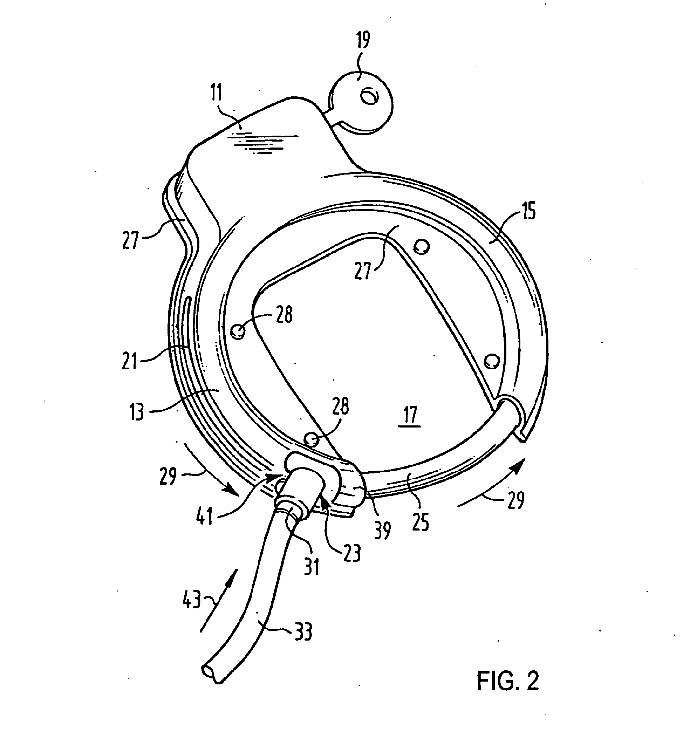

Fig. 2 zeigt das Rahmenschloss gemäß Fig. 1, wobei der Rundbügel 25 sich nun in der Schließstellung befindet. In dieser Schließstellung ist der Rundbügel 25 gegen eine Öffnungsbewegung entgegen der Schließrichtung 29 blockiert. Hierfür sorgt die erwähnte Verriegelungseinrichtung innerhalb des Basisabschnitts 11, beispielsweise indem ein vorgespanntes Verriegelungselement in eine zugeordnete Sperrnut an dem Rundbügel 25 eingreift.

Falls später der befugte Benutzer des Fahrrads den Rundbügel 25 wieder zurück in die Freigabestellung gemäß Fig. 1 überführen will, um hierdurch das blockierte Speichenrad wieder freizugeben, so ist eine Entriegelungsbetätigung der Verriegelungseinrichtung mittels des Schlüssels 19 erforderlich. Beispielsweise wird der Schlüssel 19 gedreht, um über den Schließzylinder das genannte Verriegelungselement außer Eingriff mit der Sperrnut an dem Rundbügel 25 zu bringen. Der Rundbügel 25, der beispielsweise mit einer innerhalb des Aufnahmeschenkels 15 verlaufenden Zugfeder verbunden ist, bewegt sich nach dieser Freigabe automatisch wieder in die Freigabestellung gemäß Fig. 1 zurück.

Über diese Blockierfunktion hinaus ermöglicht das in den Fig. 1 und 2 gezeigte Rahmenschloss zusätzlich das Sichern oder Fixieren eines Endstücks 31 eines Stahlseils 33. Mittels eines derartigen Stahlseils 33 kann das Fahrrad zusätzlich an einem Befestigungsobjekt, beispielsweise an einem Laternenpfosten gesichert werden. Das Fahrrad ist somit gegen eine unbefugte Entnahme, beispielsweise durch Wegtragen, gesichert. Das freie Ende des Stahlseils 33 (in den Figuren nicht gezeigt) kann zu diesem Zweck beispielsweise eine Schlaufe aufweisen, durch die das gezeigte Endstück 31 geführt wird, um eine Schlinge zu bilden, die das betreffende Befestigungsobjekt umgreift.

Bei der in Fig. 1 und 2 gezeigten ersten Ausführungsform ist das Endstück 31 als ein üblicher Kloben mit einem Sperrkopf 35 ausgebildet, der durch eine Ringnut 37 von dem restlichen Endstück 31 getrennt ist. Die Handhabe 23 ist als eine Aufnahmehülse ausgebildet, in die das Endstück 31 eingesetzt werden kann. Außerdem ist der Lagerschenkel 13 des Gehäuses am Ende des Führungsschlitzes 21 mit einer Schlitzaufnahme 39 versehen, die auf den Lagerschenkel 13 aufgesetzt ist und als Gegenelement mit der Aufnahmehülse bzw. der Handhabe 23 zusammenwirkt. Hierfür besitzt die Schlitzaufnahme 39 einen Einführschlitz 41, der oberhalb des Führungsschlitzes 21 parallel zu diesem ausgerichtet ist.

Das Sichern des Endstücks 31 an dem gezeigten Rahmenschloss geschieht wie folgt: Zunächst wird das Endstück 31 entlang einer Aufsetzrichtung 43 auf die Handhabe 23 aufgesetzt. Danach wird das Endstück 31 gemeinsam mit der das Endstück 31 umgebenden Handhabe 23 entlang der gesamten Länge des Führungsschlitzes 21 in Schließrichtung 29 geführt, bis das Endstück 31 und der Verbindungshals 26 in den Einführschlitz 41 der Schlitzaufnahme 29 hineinragen.

Zu diesem Zeitpunkt greift bereits das freie Ende des Rundbügels 25 in den Aufnahmeschenkel 15 des Gehäuses ein, und der Rundbügel 25 wird, wie erläutert, in der somit erreichten Schließstellung mittels der Verriegelungseinrichtung verriegelt. Dadurch ist auch das von der Handhabe 23 umgebene Endstück 31 gegen eine Bewegung entgegen der Schließrichtung 29 gesichert, und das Endstück 31 wird von der Schlitzaufnahme 39 gegen eine axiale Entnahme aus der Handhabe 23 entgegen der Aufsetzrichtung 43 gesichert.

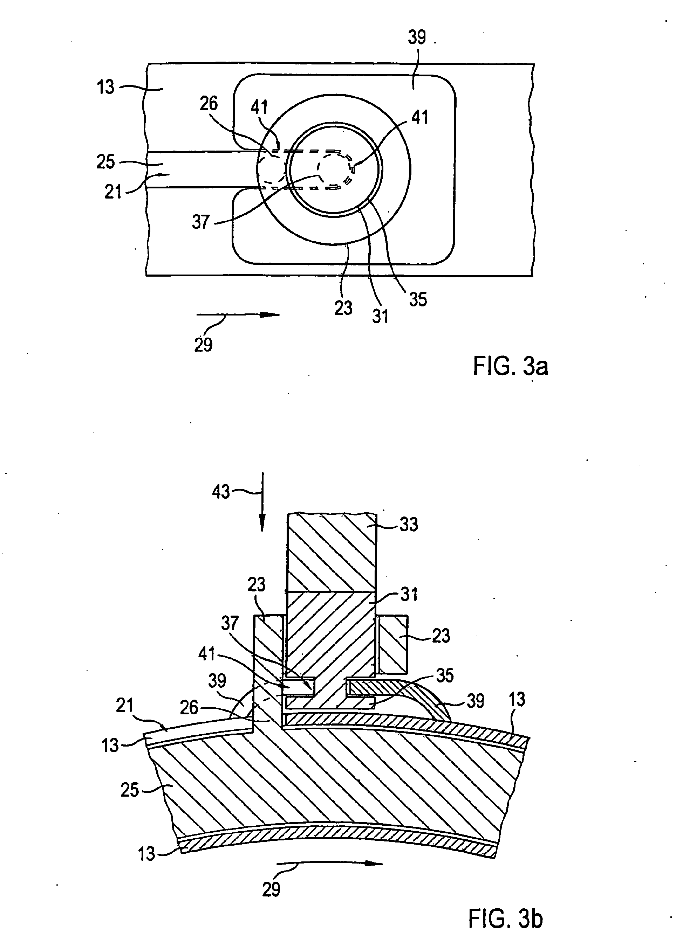

Dieses Zusammenwirken der Handhabe 23, des Endstücks 31 und der Schlitzaufnahme 39 geht aus den Detailansichten gemäß Fig. 3a und 3b hervor.

Fig. 3a zeigt in einer Draufsicht, dass das Endstück 31 koaxial in die Aufnahmehülse der Handhabe 23 aufgesetzt ist, wobei der Durchmesser des Sperrkopfs 35 größer ist als die entsprechende Aussparung des Einführschlitzes 41.

Die Seitenquerschnittsansicht gemäß Fig. 3b zeigt, dass der Verbindungshals 26 von dem kurvenförmigen Rundbügel 25 in radialer Richtung wegragt. Das Endstück 31 ragt in die von der Handhabe 23 gebildete Aufnahmehülse im Wesentlichen formschlüssig hinein. Die Schlitzaufnahme 39 greift in die Ringnut 37 des Endstücks 31 ein, so dass der Sperrkopf 35 die Schlitzaufnahme 39 hintergreift. Hierdurch ist das Endstück 31 des Stahlseils 33 gegen ein Abziehen aus der Handhabe 23 entgegen der Aufsetzrichtung 43 gesichert.

Ein Abnehmen des Endstücks 31 aus der Handhabe 23 ist erst dann wieder möglich, wenn die in dem Basisabschnitt 11 befindliche Verriegelungseinrichtung mittels des Schlüssels 19 (Fig. 1) betätigt wird, um hierdurch den vorgespannten Rundbügel 25, wie erläutert, für eine Öffnungsbewegung freizugeben. Sobald der Rundbügel 25 sich so weit entgegen der Schließrichtung 29 bewegt hat, dass die Schlitzaufnahme 39 außer Eingriff mit der Ringnut 37 des Endstücks 31 geraten ist, kann das Endstück 31 wieder aus der Handhabe 23 entnommen werden.

Das erläuterte Zusammenwirken der Handhabe 23, des Endstücks 31 und der Schlitzaufnahme 39 ermöglicht somit ein einfaches Fixieren des Stahlseils 33 an dem gezeigten Rahmenschloss dadurch, dass der Rundbügel 25 dieses Rahmenschlosses in die Schließstellung gebracht wird. Es ist von Vorteil, dass für dieses Fixieren des Stahlseils 33 keine besondere Modifizierung der Verriegelungseinrichtung des Rahmenschlosses erforderlich ist. Die Verriegelungseinrichtung kann also einen üblichen Aufbau für das Blockieren des Rundbügels 25 besitzen. Die zusätzliche Ausgestaltung des Lagerschenkels 13 mit der Schlitzaufnahme 39 kann demgegenüber mit geringem Herstellungsaufwand bewerkstelligt werden. Beispielsweise kann die Schlitzaufnahme 39 auf einfache Weise entlang ihrer Außenkontur an dem Lagerschenkel 13 angeschweißt sein, wobei für eine besonderes hohe Stabilität auch die entgegen der Schließrichtung 29 weisende Umgebung des Einführschlitzes 41 an dem Lagerschenkel 13 befestigt sein kann (vgl. Fig. 3b).

Die Handhabung des gezeigten Rahmenschlosses ist besonders einfach, da lediglich mit einer einzigen Hand das Endstück 31 des Stahlseils 33 in die Handhabe 23 einzusetzen ist (Fig. 1) und anschließend, ohne Griffwechsel, das Endstück 31 gemeinsam mit der Handhabe 23 entlang der Schließrichtung 29 verschoben wird, bis das Endstück 31 in der Schlitzaufnahme 39 zu liegen kommt. In der somit eingenommen Schließstellung blockiert die Verriegelungseinrichtung automatisch den Rundbügel 25. Auch bei einer einem späteren Freigeben des Rundbügels 25 durch eine entsprechende Entriegelungsbetätigung der Verriegelungseinrichtung mittels des Schlüssels 19 wird automatisch auch das Endstück 31 von der Handhabe 23 freigegeben, sobald der Rundbügel 25 die Schließstellung gemäß Fig. 2, 3a, 3b verlässt.

Zu der erläuterten Ausführungsform ist noch anzumerken, dass die Aufnahmehülse 23 und die Schlitzaufnahme 39 - abweichend von der Darstellung gemäß Fig. 1, 2, 3a, 3b - auch seitlich versetzt zu dem Führungsschlitz 21 des Lagerschenkels 13 angeordnet sein können. In diesem Fall ist die Aufnahmehülse 23 an dem aus dem Führungsschlitz 21 heraus ragenden Verbindungshals 26 seitlich angeordnet oder befestigt. In der Schließstellung des Rundbügels 25 ragt zwar das in die Aufnahmehülse 23 eingesetzte Endstück 31 in den Einführschlitz 41 der Schlitzaufnahme 39 hinein. Jedoch befindet sich der Verbindungshals 26 nicht innerhalb des Einführschlitzes 41, sondern an einer Außenseite der Schlitzaufnahme 39.

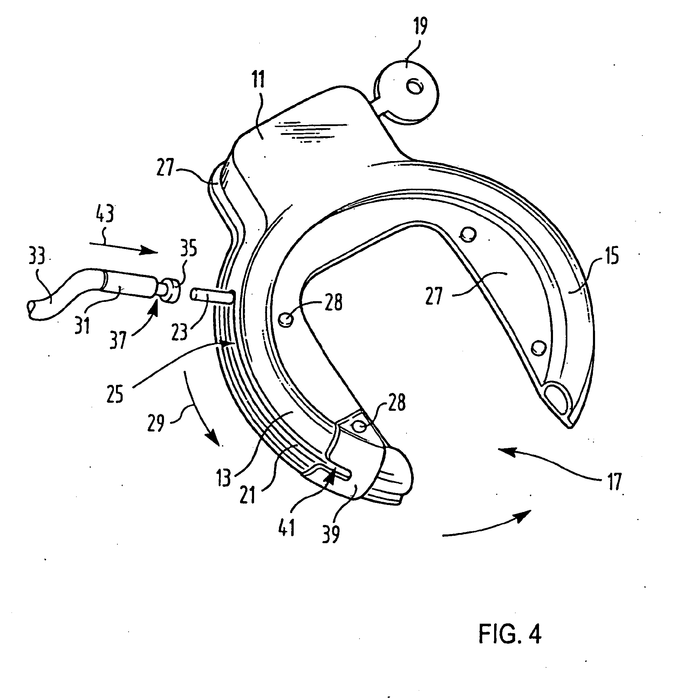

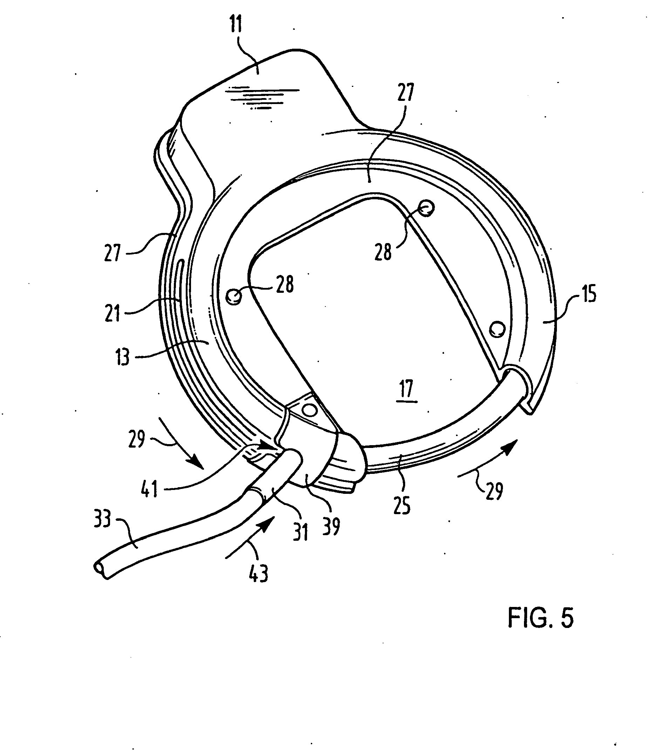

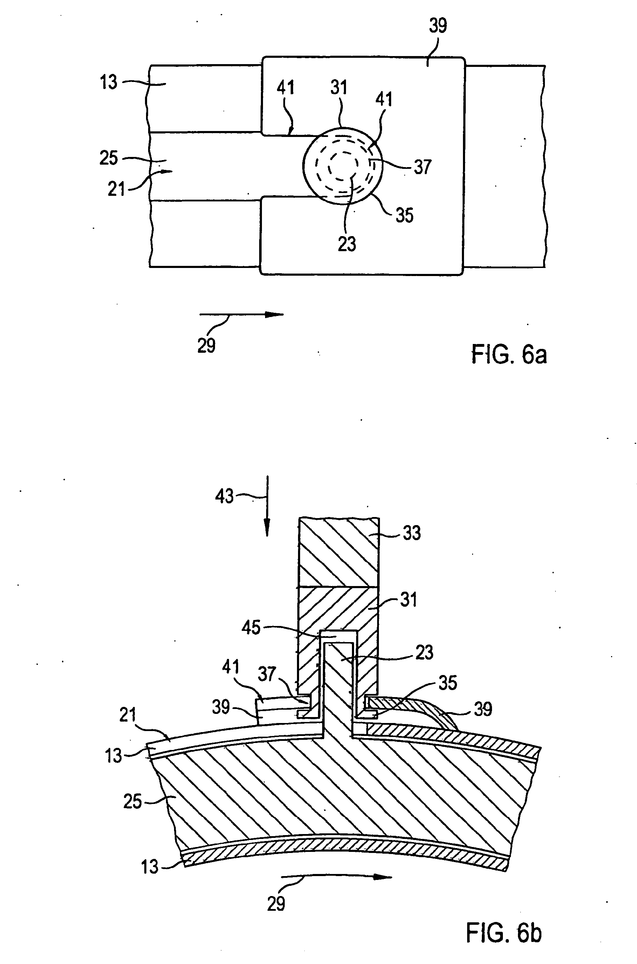

Fig. 4, 5, 6a und 6b entsprechen den erläuterten Fig. 1, 2, 3a bzw. 3b, und sie zeigen eine Variante der erläuterten ersten Ausführungsform. Hier ist das Endstück 31 als ein hohler Kloben mit einer Ringnut 37 und einem Sperrkopf 35 ausgebildet. Die Handhabe 23 ist als ein Aufsetzdorn ausgebildet, auf den das hohle Endstück 31 aufgesetzt oder aufgeschoben werden kann. Die Schlitzaufnahme 39 umgreift hier den Lagerschenkel 13 manschettenartig und ist durch einen Verbindungsniet 28 zusätzlich fixiert.

Auch hier erfolgt das Sichern des Endstücks 31 an dem Rahmenschloss dadurch, dass zunächst das hohle Endstück 31 entlang der Aufsetzrichtung 43 auf die Handhabe 23 aufgesetzt wird. Danach wird das Endstück 31 gemeinsam mit der hiervon umgebenen Handhabe 23 in Schließrichtung 29 geführt, bis das Endstück 31 gemeinsam mit der Handhabe 23 in den Einführschlitz 41 der Schlitzaufnahme 29 hineinragt und die Verriegelungseinrichtung den Rundbügel 25 in der somit erreichten Schließstellung verriegelt. Die Schlitzaufnahme 39 greift nun in die Ringnut 37 des Endstücks 31 ein, so dass der Sperrkopf 35 wiederum die Schlitzaufnahme 39 hintergreift. Hierdurch ist das Endstück 31 des Stahlseils 33 gegen ein Abziehen von der Handhabe 23 entgegen der Aufsetzrichtung 43 gesichert.

Ein Abnehmen des Endstücks 31 von der Handhabe 23 ist erst dann wieder möglich, wenn nach einer Entriegelung des Rundbügels 25 dieser so weit entgegen der Schließrichtung 29 bewegt worden ist, dass die Schlitzaufnahme 39 außer Eingriff mit der Ringnut 37 des Endstücks 31 geraten ist.

Zu der erläuterten Variante der ersten Ausführungsform ist noch anzumerken, dass die Schlitzaufnahme 39 - anstelle des manschettenartigen Umgreifens des Lagerschenkels 13 - entlang ihrer Außenkontur und insbesondere in der Umgebung des Einführschlitzes 41 an dem Lagerschenkel 13 angeschweißt sein kann, wie bereits im Zusammenhang mit Fig. 3b erläutert. Dies gilt entsprechend auch für die Schlitzaufnahmen 39 der nachfolgend erläuterten Ausführungsformen.

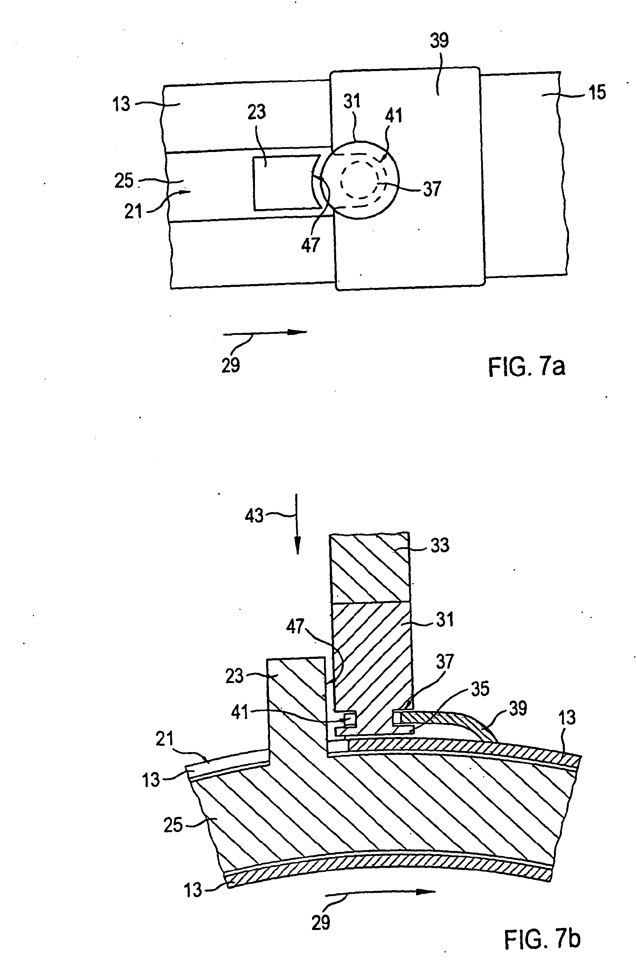

Fig. 7a und 7b zeigen in einer den Fig. 3a und 3b jeweils entsprechenden Ansicht eine zweite Ausführungsform eines Rahmenschlosses, bei dem die Handhabe 23 des Rundbügels 25 gleichzeitig als ein Sicherungselement zum Sichern des Endstücks 31 eines Stahlseils 33 dient. Bei dieser Ausführungsform ist das Endstück 31 als ein üblicher Kloben ausgebildet, d.h. mit einem Sperrkopf 35 und einer Ringnut 37, jedoch ohne Hohlraum. Dieser Kloben kann, während der Rundbügel 25 sich in der Freigabestellung gemäß Fig. 1 befindet, in einen Einführschlitz 41 einer Schlitzaufnahme 39 seitlich eingeführt werden. Die Handhabe 23 besitzt einen Blockierabschnitt 47 in Form einer konkaven Fläche, die komplementär zu dem Endstück 31 ausgebildet ist.

In der in den Fig. 7a und 7b gezeigten Schließstellung des Rundbügels 25 blockiert die Handhabe 23 das Endstück 31 gegen eine seitliche Entnahme aus der Schlitzaufnahme 39. Das Endstück 31 bleibt somit auch gegen eine axiale Entnahme entgegen der Längsrichtung 43 gesichert. Erst wenn der Rundbügel 25 zurück in die Freigabestellung überführt und die Handhabe 23 somit entgegen der Schließrichtung 29 bewegt worden ist, kann das Endstück 31 wieder entgegen der Schließrichtung 29 aus der Schlitzaufnahme 39 entnommen werden.

Auch diese zweite Ausführungsform hat den Vorteil, dass eine zusätzliche Sicherung des Endstücks 31 an dem Rahmenschloss möglich ist, ohne dass es einer besonderen Modifizierung der eigentlichen Verrieglungseinrichtung des Rahmenschlosses bedarf. Das Sichern des Endstücks 31 erfolgt nämlich auch hier indirekt mittels der als Sicherungselement fungierenden Handhabe 23.

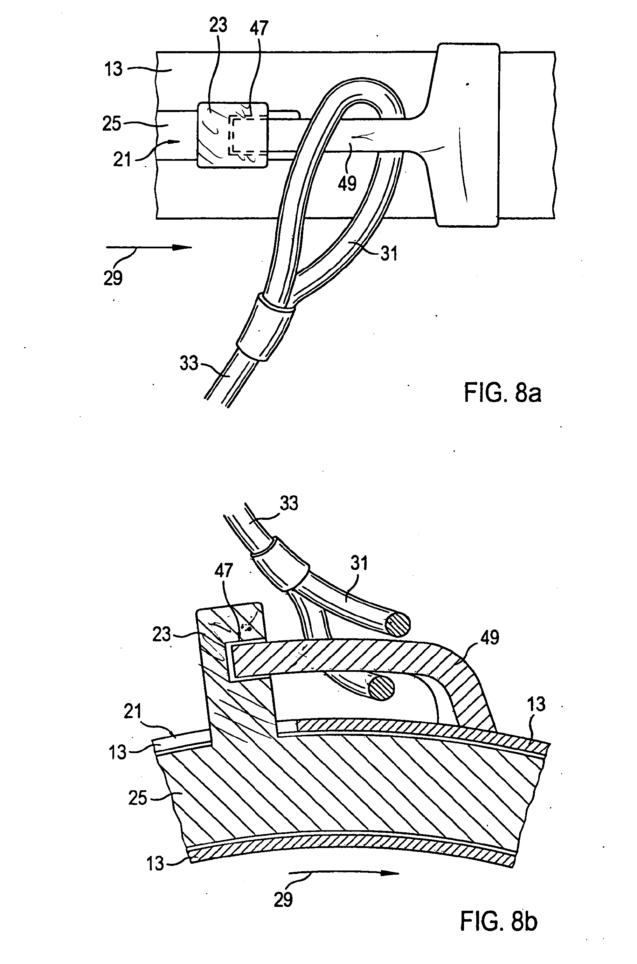

Fig. 8a und 8b zeigen, in entsprechenden Ansichten, eine Variante der zweiten Ausführungsform gemäß Fig. 7a und 7b. Auch hier dient die Handhabe 23 zum Sichern eines Endstücks 31 eines Stahlseils 33. Der Blockierabschnitt 47 der Handhabe 23 ist bei diesem Beispiel jedoch als eine hohle Bügelaufnahme ausgebildet.

Anstelle einer Schlitzaufnahme ist als Halterung zum Aufnehmen des Endstücks 31 ein Sicherungsbügel 49 vorgesehen. Dieser ist mit einer Manschette verbunden, die auf den Lagerschenkel 13 des Gehäuses aufgesetzt ist und diesen umgreift oder daran verschweißt ist. Der Sicherungsbügel 49 erstreckt sich im Wesentlichen parallel zu der Längsrichtung des Rundbügels 25 bzw. zu der Schließrichtung 29. Das freie Ende des Sicherungsbügels 49 greift in der in Fig. 8a und 8b gezeigten Schließstellung des Rundbügels 25 in den hohlen Blockierabschnitt 47 der Handhabe 23 ein. Der hohle Blockierabschnitt 47 der Handhabe 23 und der Sicherungsbügel 49 wirken somit als Sicherungselement und Gegenelement zusammen.

Bei dieser Variante ist das Endstück 31 des Stahlseils 33 vorzugsweise als eine Schlaufe oder eine Öse ausgebildet, die auf den Sicherungsbügel 49 seitlich, also in Schließrichtung 29 aufgesetzt wird, während der Rundbügel 25 sich in der Freigabestellung befindet und die Handhabe 23 dementsprechend beabstandet von dem Sicherungsbügel 49 angeordnet ist. Wenn nun der Rundbügel 25 in die in den Fig. 8a und 8b gezeigte Schließstellung überführt wird, so nähert sich die Handhabe 23 automatisch dem Sicherungsbügel 49 und blockiert schließlich die Schlaufe bzw. das Endstück 31 gegen eine seitliche Entnahme.

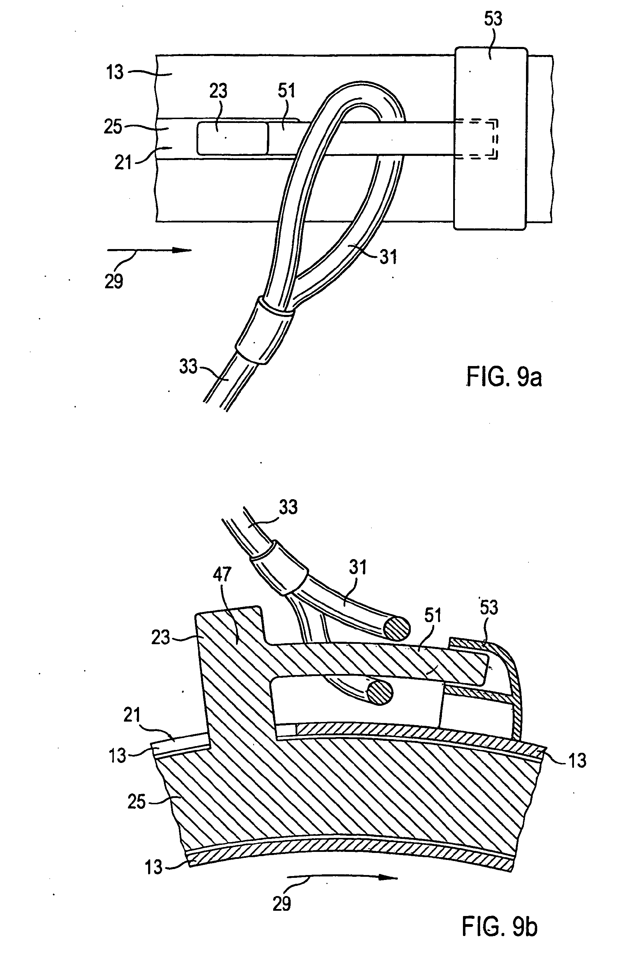

Fig. 9a und 9b zeigen schließlich in einer den Fig. 3a und 3b jeweils entsprechenden Ansicht eine dritte Ausführungsform eines Rahmenschlosses, bei dem zum Sichern eines Endstücks 31 eines Stahlseils 33 ein Sicherungsbügel 51 an der Handhabe 23 angeformt ist. Der Sicherungsbügel 51 erstreckt sich im Wesentlichen in Schließrichtung 29 und somit parallel zu der Längsrichtung des Rundbügels 25. An dem Lagerschenkel 13 des Gehäuses ist eine Bügelaufnahme 53 ausgebildet, die auf den Lagerschenkel 13 aufgesetzt ist.

In der in den Fig. 9a und 9b gezeigten Schließstellung des Rundbügels 25 greift das freie Ende des Sicherungsbügels 51 in die Bügelaufnahme 53 ein. Dadurch ist das durch eine Schlaufe gebildete Endstück 31 des Stahlseils 33 an dem Sicherungsbügel 51 gesichert. Erst wenn die Handhabe 23 gemeinsam mit dem Rundbügel 25 wieder entgegen der Schließrichtung 29 bewegt wird, begibt sich der Rundbügel 25 zurück in die Freigabestellung, und auch das Endstück 31 kann von dem Sicherungsbügel 51 seitlich abgezogen werden.

Zu den erläuterten Ausführungsformen ist noch anzumerken, dass die Handhabe 23 nicht unbedingt einstückig mit dem Rundbügel 25 ausgebildet sein muss, sondern auch als separates Bauteil an diesem befestigt, beispielsweise verschweißt sein kann. Außerdem kann das gezeigte Rahmenschloss beispielsweise an dem Basisabschnitt 11 auch eine zusätzliche Befestigungseinrichtung zur Aufbewahrung des Stahlseils 33 während der Fahrt aufweisen.

### Bezugszeichenliste

- 11: Basisabschnitt
- 13: Lagerschenkel
- 15: Aufnahmeschenkel
- 17: Schließbereich
- 19: Schlüssel
- 21: Führungsschlitz
- 23: Handhabe
- 25: Rundbügel
- 26: Verbindungshals
- 27: Versteifungsfläche
- 28: Verbindungsniet
- 29: Schließrichtung
- 31: Endstück
- 33: Stahlseil
- 35: Sperrkopf
- 37: Ringnut
- 39: Schlitzaufnahme
- **41**: **Einführschlitz**
- 43: Aufsetzrichtung
- 45: Hohlraum
- 47: Blockierabschnitt
- 49: Sicherungsbügel
- 51: Sicherungsbügel
- 53: Bügelaufnahme

## Patentansprüche

1. Sicherungssystem mit einem Rahmenschloss für ein Zweirad und mit einem Sicherungsseil (33), wobei das Rahmenschloss umfasst:
- ein Gehäuse, das einen Lagerschenkel (13) und einen Aufnahmeschenkel (15) aufweist, wobei der Lagerschenkel und der Aufnahmeschenkel einen Schließbereich (17) zur Aufnahme eines Speichenrads umgeben,
- einen Rundbügel (25), der in oder an dem Lagerschenkel des Gehäuses gelagert ist und der bewegbar ist zwischen einer Freigabestellung, in der der Schließbereich (17) des Rahmenschlosses freigegeben ist, und einer Schließstellung, in der der Rundbügel (25) den Schließbereich des Rahmenschlosses durchquert und von dem Aufnahmeschenkel des Gehäuses aufgenommen wird,
- eine Handhabe, die mit dem Rundbügel (25) verbunden ist und die gemeinsam mit dem Rundbügel (25) zwischen der Freigabestellung und der Schließstellung bewegbar ist,
- eine Verriegelungseinrichtung zum Verriegeln des Rundbügels in der Schließstellung, und
- ein Sicherungselement, das in der Schließstellung des Rundbügels ein Endstück (31) des Sicherungsseils (33) an dem Rahmenschloss sichert,
**dadurch gekennzeichnet,**
**dass** das Sicherungselement (47, 51) durch die Handhabe (23) gebildet ist.

2. Sicherungssystem nach Anspruch 1,
**dadurch gekennzeichnet,**
**dass** in der Schließstellung des Rundbügels das Endstück (31) des Sicherungsseils an dem Sicherungselement (23, 47, 51) gefangen ist.

3. Sicherungssystem nach einem der vorhergehenden Ansprüche,
**dadurch gekennzeichnet,**
**dass** der Lagerschenkel (13) des Gehäuses ein Gegenelement (39, 49, 53) aufweist, das zum Sichern des Endstücks (31) des Sicherungsseils mit dem Sicherungselement (23, 47, 51) zusammenwirkt.

4. Sicherungssystem nach Anspruch 3,
**dadurch gekennzeichnet,**
**dass** in der Schließstellung des Rundbügels das Endstück (31) des Sicherungsseils an dem Gegenelement (39, 49) gefangen ist.

5. Sicherungssystem nach einem der vorhergehenden Ansprüche,
**dadurch gekennzeichnet,**
**dass** das Sicherungselement (23, 47, 51) einstückig mit dem Rundbügel (25) ausgebildet oder dauerhaft mit dem Rundbügel (25) verbunden ist.

6. Sicherungssystem nach einem der vorhergehenden Ansprüche,
**dadurch gekennzeichnet,**
**dass** das Sicherungselement eine Aufnahmehülse (23) zum Aufnehmen des Endstücks (31) des Sicherungsseils aufweist, wobei die Aufnahmehülse über einen Verbindungshals (26) mit dem Rundbügel (25) verbunden ist, und
**dass** der Lagerschenkel (13) des Gehäuses mit einer Schlitzaufnahme (39) versehen ist, in die das in der Aufnahmehülse (23) aufgenommene Endstück (31) dergestalt einführbar ist, dass in der Schließstellung des Rundbügels (25) das in der Aufnahmehülse (23) aufgenommene Endstück (31) gegen eine Entnahme aus der Aufnahmehülse (23) gesichert ist.

7. Sicherungssystem nach Anspruch 6,
**dadurch gekennzeichnet,**
**dass** das Endstück (31) des Sicherungsseils als ein Kloben ausgebildet ist.

8. Sicherungssystem nach einem der vorhergehenden Ansprüche,
**dadurch gekennzeichnet,**
**dass** das Sicherungselement einen Aufsetzdorn (23) zum Aufnehmen des Endstücks (31) des Sicherungsseils aufweist, und
**dass** der Lagerschenkel (13) des Gehäuses mit einer Schlitzaufnahme (39) versehen ist, in die der Aufsetzdorn mit aufgesetztem Endstück dergestalt einführbar ist, dass in der Schließstellung des Rundbügels (25) das Endstück (31) gegen eine Entnahme von dem Aufsetzdorn (23) gesichert ist.

9. Sicherungssystem nach Anspruch 8,
**dadurch gekennzeichnet,**
**dass** das Endstück (31) des Sicherungsseils als ein hohler Kloben ausgebildet ist, der auf den Aufsetzdorn (23) aufsetzbar ist.

10. Sicherungssystem nach einem der vorhergehenden Ansprüche,
**dadurch gekennzeichnet,**
**dass** das Sicherungselement einen Blockierabschnitt (47) aufweist, und dass der Lagerschenkel (13) des Gehäuses mit einer Halterung (39, 49) zum Aufnehmen des Endstücks (31) des Sicherungsseils versehen ist,
wobei der Blockierabschnitt und die Halterung dergestalt zusammenwirken, dass in der Schließstellung des Rundbügels (25) das von der Halterung (39, 49) aufgenommene Endstück (31) des Sicherungsseils durch den Blockierabschnitt (47) gegen eine Entnahme von der Halterung gesichert ist.

11. Sicherungssystem nach Anspruch 10,
**dadurch gekennzeichnet,**
**dass** das Endstück (31) des Sicherungsseils einen Kloben aufweist, und
**dass** die Halterung (39) als eine Einschubaufnahme zum Einschieben des Klobens ausgebildet ist.

12. Sicherungssystem nach Anspruch 10,
**dadurch gekennzeichnet,**
**dass** das Endstück (31) des Sicherungsseils eine Schlaufe aufweist, und
**dass** die Halterung (49) als ein Sicherungsbügel zum Aufnehmen der Schlaufe ausgebildet ist.

13. Sicherungssystem nach einem der vorhergehenden Ansprüche,
**dadurch gekennzeichnet,**
**dass** das Sicherungselement einen Sicherungsbügel (51) zum Aufnehmen des Endstücks (31) des Sicherungsseils aufweist, und
**dass** der Lagerschenkel (13) des Gehäuses mit einer Bügelaufnahme (53) versehen ist, in die das freie Ende des Sicherungsbügels (51) dergestalt einführbar ist, dass in der Schließstellung des Rundbügels (25) das Endstück (31) des Sicherungsseils gegen eine Entnahme von dem Sicherungsbügel (51) gesichert ist.

14. Sicherungssystem nach Anspruch 13,
**dadurch gekennzeichnet,**
**dass** das Endstück (31) des Sicherungsseils eine Schlaufe aufweist, die auf den Sicherungsbügel (51) aufsetzbar ist.

## Claims

1. A security system having a frame lock for a two-wheeler and having a security cable (33), the frame lock comprising:
- a housing which has a supporting limb (13) and a receiving limb (15), with the supporting limb and the receiving limb surrounding a closing region (17) for the reception of a spoked wheel;
- a circular hoop (25) which is supported in or on the supporting limb of the housing and which is movable between a release position, in which the closing region (17) of the frame lock is released, and a closed position, in which the circular hoop (25) passes through the closing region of the frame lock and is received by the receiving limb of the housing;
- a handle which is connected to the circular hoop (25) and which is movable together with the circular hoop (25) between the release position and the closed position;
- a latch device for the latching of the circular hoop in the closed position; and
- a securing element which secures an end piece (31) of the securing cable (33) to the frame lock in the closed position of the circular hoop,
**characterised in that**
the securing element (47, 5 1) is formed by the handle (23).

2. A securing system in accordance with claim 1, **characterised in that** the end piece (31) of the securing cable is captured at the securing element (23, 47, 51) in the closed position of the circular hoop.

3. A securing system in accordance with any one of the preceding claims, **characterised in that** the supporting limb (13) of the housing has a counter-element (39, 49, 53) which cooperates with the securing element (23, 47, 51) to secure the end piece (31) of the securing cable.

4. A securing system in accordance with claim 3, **characterised in that** the end piece (31) of the securing cable is captured at the counter-element (39, 49) in the closed position of the circular hoop.

5. A securing system in accordance with any one of the preceding claims, **characterised in that** the securing element (23, 47, 51) is formed in one piece with the circular hoop (25) or is permanently connected to the circular hoop (25).

6. A securing system in accordance with any one of the preceding claims, **characterised in that** the securing element has a receiving sleeve (23) for the receiving of the end piece (31) of the securing cable, with the receiving sleeve being connected to the circular hoop (25) via a connection neck (26); and
**in that** the supporting limb (13) of the housing is provided with a slot mount (39) into which the end piece (31) received in the receiving sleeve (23) can be introduced such that the end piece (31) received in the receiving sleeve (23) is secured against removal from the receiving sleeve (23) in the closed position of the circular hoop (25).

7. A securing system in accordance with claim 6, **characterised in that** the end piece (31) of the securing cable is made as a bolt.

8. A securing system in accordance with any one of the preceding claims, **characterised in that** the securing element has a placement mandrel (23) for the receiving of the end piece (31) of the securing cable; and
**in that** the supporting limb (13) of the housing is provided with a slot mount (39) into which the placement mandrel with the end piece placed on can be introduced such that the end piece (31) is secured against removal from the placement mandrel (23) in the closed position of the circular hoop (25).

9. A securing system in accordance with claim 8, **characterised in that** the end piece (31) of the securing cable is made as a hollow bolt which can be placed onto the placement mandrel (23).

10. A securing system in accordance with any one of the preceding claims, **characterised in that** the securing element has a blocking section (47); and **in that** the supporting limb (13) of the housing is provided with a holder (39, 49) for the receiving of the end piece (31) of the securing cable,
with the blocking section and the holder cooperating with one another such that the end piece (31) of the securing cable received by the holder (39, 49) is secured against removal from the holder by the blocking section (47) in the closed position of the circular hoop (25).

11. A securing system in accordance with claim 10, **characterised in that** the end piece (31) of the securing cable has a bolt; and
**in that** the holder (39) is formed as an insertion mount for the insertion of the bolt.

12. A securing system in accordance with claim 10, **characterised in that** the end piece (31) of the securing cable has a loop; and
**in that** the holder (49) is made as a securing hoop for the receiving of the loop.

13. A securing system in accordance with any one of the preceding claims, **characterised in that** the securing element has a securing hoop (51) for the receiving of the end piece (31) of the securing cable; and
**in that** the supporting limb (13) of the housing is provided with a hoop mount (53) into which the free end of the securing hoop (51) can be introduced such that the end piece (31) of the securing cable is secured against removal from the securing hoop (51) in the closed position of the circular hoop (25).

14. A securing system in accordance with claim 13, **characterised in that** the end piece (31) of the securing cable has a loop which can be placed onto the securing hoop (51).

## Revendications

1. Système de blocage comprenant un verrou de cadre pour une bicyclette, et comprenant un câble de blocage (33), dans lequel le verrou de cadre comprend :
- un boîtier qui présente un bras de montage (13) et un bras de réception (15), le bras de montage et le bras de réception entourant une zone de fermeture (17) pour recevoir une roue à rayons,
- un arceau rond (25) qui est monté dans ou sur le bras de montage boîtier et qui est déplaçable entre une position de libération dans laquelle la zone de fermeture (17) du verrou de cadre est libérée, et une position fermée dans laquelle l'arceau rond (25) traverse la zone de fermeture du verrou de cadre et est reçu par le bras de réception du boîtier,
- une manette, qui est reliée à l'arceau rond (25) et qui est déplaçable conjointement avec l'arceau rond (25) entre la position de libération et la position de fermeture,
- un dispositif de verrouillage pour verrouiller l'arceau rond dans la position de fermeture, et
- un élément de blocage qui, dans la position de fermeture de l'arceau rond, bloque une pièce terminale (31) du câble de blocage (33) sur le verrou de cadre,
**caractérisé en ce que** l'élément de blocage (47, 51) est formé par la manette (23).

2. Système de blocage selon la revendication 1,
**caractérisé en ce que**, dans la position de fermeture de l'arceau rond, la pièce terminale (31) du câble de blocage est maintenue contre l'élément de blocage (23, 47, 51).

3. Système de blocage selon l'une des revendications précédentes,
**caractérisé en ce que** le bras de montage (13) du boîtier présente un élément antagoniste (39, 49, 53) qui coopère avec l'élément de blocage (23, 47, 51) pour le blocage de la pièce terminale (31) du câble de blocage.

4. Système de blocage selon la revendication 3,
**caractérisé en ce que**, dans la position de fermeture de l'arceau rond, la pièce terminale (31) du câble de blocage est maintenue contre l'élément antagoniste (39, 49).

5. Système de blocage selon l'une des revendications précédentes,
**caractérisé en ce que** l'élément de blocage (23, 47, 51) est réalisé d'une seule pièce avec l'arceau rond (25) ou est relié durablement à l'arceau rond (25).

6. Système de blocage selon l'une des revendications précédentes,
**caractérisé en ce que** l'élément de blocage présente une douille de réception (23) pour recevoir la pièce terminale (31) du câble de blocage, ladite douille de réception étant reliée à l'arceau rond (25) via un col de liaison (26), et
**en ce que** le bras de montage (13) du boîtier est pourvu d'une réception en fente (39) dans laquelle la pièce terminale (31) reçue dans la douille de réception (23) peut être introduite de telle façon que, dans la position de fermeture de l'arceau rond (25), la pièce terminale (31) reçue dans la douille de réception (23) est bloquée à l'encontre d'un enlèvement hors de la douille de réception (23).

7. Système de blocage selon la revendication 6,
**caractérisé en ce que** la pièce terminale (31) du câble de blocage est réalisée sous forme de bloc.

8. Système de blocage selon l'une des revendications précédentes,
**caractérisé en ce que** l'élément de blocage présente un ergot de pose (23) pour recevoir la pièce terminale (31) du câble de blocage, et
**en ce que** le bras de montage (13) du boîtier est pourvu d'une réception en fente (39) dans laquelle l'ergot de pose avec la pièce terminale posée sur celui-ci sont susceptibles d'être introduits de telle façon que, dans la position de fermeture de l'arceau rond (25), la pièce terminale (31) est bloquée à l'encontre d'un enlèvement depuis l'ergot de pose (23).

9. Système de blocage selon la revendication 8,
**caractérisé en ce que** la pièce terminale (31) du câble de blocage est réalisée sous la forme d'un bloc creux qui peut être posé sur l'ergot de pose (23).

10. Système de blocage selon l'une des revendications précédentes,
**caractérisé en ce que** l'élément de blocage comprend un tronçon de blocage (47), et **en ce que** le bras de montage (13) du boîtier est pourvu d'une monture (39, 49) pour recevoir la pièce terminale (31) du câble de blocage,
dans lequel le tronçon de blocage et la monture coopèrent de telle façon que, dans la position de fermeture de l'arceau rond (25), la pièce terminale (31), reçue par la monture (39, 49), du câble de blocage est bloquée par le tronçon de blocage (47) à l'encontre d'un enlèvement depuis la monture.

11. Système de blocage selon la revendication 10,
**caractérisé en ce que** la pièce terminale (31) du câble de blocage comprend un bloc, et
**en ce que** la monture (39) est réalisée sous forme de réception à enfilement pour y enfiler le bloc.

12. Système de blocage selon la revendication 10,
**caractérisé en ce que** la pièce terminale (31) du câble de blocage comprend une boucle, et
**en ce que** la monture (49) est réalisée sous forme d'étrier de blocage pour recevoir la boucle.

13. Système de blocage selon l'une des revendications précédentes,
**caractérisé en ce que** l'élément de blocage comprend un étrier de blocage (51) pour recevoir la pièce terminale (31) du câble de blocage, et
**en ce que** le bras de montage (13) du boîtier est pourvu d'un logement d'étrier (53), dans lequel l'extrémité libre de l'étrier de blocage (51) peut être introduite de telle façon que, dans la position de fermeture de l'arceau rond (25), la pièce terminale (31) du câble de blocage est bloquée par l'étrier de blocage (51) à l'encontre d'un enlèvement.

14. Système de blocage selon la revendication 13,
**caractérisé en ce que** la pièce terminale (31) du câble de blocage comprend une boucle qui peut être posée sur l'étrier de blocage (51).
